(19) Europäisches Patentamt
European Patent Office
Office européen des brevets

(11) **EP 3 013 749 B1**

(12) **FASCICULE DE BREVET EUROPEEN**

(45) Date de publication et mention
de la délivrance du brevet:
**12.02.2020 Bulletin 2020/07**

(21) Numéro de dépôt: **14735513.5**

(22) Date de dépôt: **26.06.2014**

(51) Int Cl.:
**C01D 7/24** (2006.01)       **C01D 7/00** (2006.01)
**C01D 7/40** (2006.01)

(86) Numéro de dépôt international:
**PCT/EP2014/063555**

(87) Numéro de publication internationale:
**WO 2014/207120 (31.12.2014 Gazette 2014/53)**

(54) **PROCÉDÉ DE PRÉPARATION DE PARTICULES DE BICARBONATE DE MÉTAL ALCALIN**

VERFAHREN ZUR HERSTELLUNG VON ALKALIMETALL-BICARBONAT-TEILCHEN

METHOD FOR PREPARING ALKALI METAL BICARBONATE PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2013 FR 1356160**

(43) Date de publication de la demande:
**04.05.2016 Bulletin 2016/18**

(73) Titulaire: **Solvay SA**
**1120 Bruxelles (BE)**

(72) Inventeur: **SAVARY, David, Jean, Lucien**
**69360 Sérézin-du-Rhône (FR)**

(74) Mandataire: **Vande Gucht, Anne**
**Solvay S.A.**
**Intellectual Assets Management**
**Rue de Ransbeek, 310**
**1120 Bruxelles (BE)**

(56) Documents cités:
**US-A- 2 642 342      US-A- 2 954 282**
**US-A- 3 072 466      US-A- 3 725 014**
**US-A- 3 981 686**

- **MARTINEZ-CRUZ N ET AL: "Effect of molecular weight of polystyrensulfonic acid sodium salt polymers on the precipitation kinetics of sodium bicarbonate", JOURNAL OF CRYSTAL GROWTH, ELSEVIER, AMSTERDAM, NL, vol. 270, no. 3-4, 1 octobre 2004 (2004-10-01), pages 573-581, XP004565858, ISSN: 0022-0248, DOI: 10.1016/J.JCRYSGRO.2004.06.024**
- **CHEMICAL ABSTRACTS, CHEMICAL ABSTRACTS SERVICE (C A S), US, 21 octobre 1991 (1991-10-21), XP000318285, ISSN: 0009-2258**

EP 3 013 749 B1

# EP 3 013 749 B1

**Description**

**Domaine technique**

L'invention porte sur un procédé de préparation de particules de bicarbonate alcalin et sur les particules de bicarbonate alcalin pouvant être obtenues par le dit procédé. L'invention concerne aussi un procédé réalisé en vue de contrôler le poids spécifique par écoulement des poudres constituées des dites particules, et/ou réalisé en vue de contrôler la taille des dites particules.

**Art antérieur**

Les bicarbonates de métal alcalin, tel les bicarbonates de sodium ($NaHCO_3$) et de potassium ($KHCO_3$), sont des produits ayant de nombreuses propriétés, et intéressant de vastes domaines d'utilisation, s'étendant de l'industrie pharmaceutique, à l'alimentation humaine et animale, en passant par la détergence, le traitement des fumées acides, et le traitement des métaux non ferreux.

La façon la plus courante pour fabriquer de tels bicarbonates sous forme de particules solides consiste en une cristallisation des bicarbonates par carbonatation avec du dioxyde de carbone, d'une solution de carbonate du métal alcalin correspondant (carbonate de sodium ou de potassium par exemple) ou d'une solution d'hydroxyde du métal alcalin correspondant (hydroxyde de sodium ou de potassium par exemple). En général ces solutions sont aqueuses. Toutefois des mélanges de solvant eau/ alcools tels des mélanges eau/ éthanol sont aussi fréquents. Il est aussi fréquent de cristalliser les bicarbonates par refroidissement contrôlé de solutions de bicarbonates, ou par évaporation de telles solutions.

La plupart des utilisations de bicarbonates alcalins sous forme de poudres de particules, nécessitent un contrôle de leur poids spécifique par écoulement (noté 'PSE' dans le texte ci-après), encore appelé 'bulk density' en anglais. Ce contrôle est important pour pouvoir maîtriser le poids que l'on peut introduire dans un emballage donné (sacs, big-bags, par exemple) ou maîtriser le poids chargé dans des camions de transport de vrac dont les volumes standards sont fixés. D'autre part les utilisateurs industriels de telles poudres disposent souvent de doseurs volumétriques qui doivent être réajustés en cas de variation du poids spécifique des poudres livrées, ce qui engendre des pertes de temps dans le cas d'utilisation de différents lots ou de lots de provenance de divers sites de production. Il est donc souhaitable de pouvoir disposer d'un moyen simple en production de tels bicarbonates pour ajuster leur PSE.

D'autre part les utilisateurs finaux, sont intéressés par des coupes granulométriques définies et optimisées pour leurs applications en fonction des propriétés recherchées : par exemple vitesses de dissolution, capacité à être mélangées à d'autres poudres de façon homogène sans ségrégation, fluidité des poudres pour une manipulation aisée (mesurée par exemple par l'angle de talus, ou par la vitesse d'écoulement à travers un orifice calibré), etc...

Il est donc important de pouvoir disposer d'un moyen simple et efficace pour pouvoir ajuster aussi la coupe granulométrique des particules de bicarbonate fabriquées.

Dans les procédés existants plusieurs paramètres peuvent être ajustés afin de contrôler le poids spécifique des poudres obtenues ainsi que leurs granulométries. Toutefois ces deux caractéristiques ne sont pas univoquement liées. En effet le poids spécifique par écoulement dépend de plusieurs facteurs, parmi lesquels on peut citer : la taille des particules, les répartitions granulométriques (répartitions massiques des particules dans différentes fractions granulométriques, distributions unimodales ou pluri-modales, distributions granulométriques étalées ou étroites), les facteurs de forme des particules (circularité, robustesse, taille de plus grande concavité, indice de concavité en surface), etc...

Là aussi il est utile de pouvoir disposer d'un moyen simple en production de tels bicarbonates, pour ajuster la taille des particules et notamment leurs refus ou passés sur tamis à divers diamètres de coupure.

Il est connu de US 3981686 d'ajouter 1 à 20 ppm de gomme de guar pendant la cristallisation de bicarbonate de sodium.

**Résumé de l'invention**

La présente invention porte sur un procédé de préparation par cristallisation de particules de bicarbonate de métal alcalin à partir d'une solution de carbonate et/ ou de bicarbonate de métal alcalin (solution dénommée ci-après : 'la solution') en présence d'un additif dans la solution, tel que défini dans la revendication 1.

Les inventeurs ont en effet constaté de façon surprenante que les additifs listés ci-dessus, utilisés lors de la cristallisation des particules de bicarbonate de métal alcalin permettaient d'obtenir des particules présentant une synergie entre leur granulométrie, leur facteur de forme, voire leurs potentiels de charges électriques en surface, permettant soit une augmentation ajustable et importante du poids spécifique par écoulement des particules obtenues, soit une diminution du poids spécifique. Ils permettent aussi de moduler leurs granulométriques, et leurs étalement ou resserrement des distributions granulométriques.

L'invention porte aussi sur les particules de bicarbonate de métal alcalin ainsi obtenues, et/ou obtenables selon le présent procédé.

## Description des figures

La Fig. 1 est une photographie au microscope optique de particules de bicarbonate de sodium obtenues par carbonatation sans ajout d'additif.
La Fig. 2 est une photographie au microscope optique de particules de bicarbonate de sodium obtenues par carbonatation avec ajout d'additif (acide algénique 50 ppm. Exemple 3, Essai 11(b)).

## Définitions

Dans le présent mémoire, le choix d'un élément parmi un groupe d'éléments décrit également explicitement:

- le choix de deux ou le choix de plusieurs éléments du groupe,
- le choix d'un élément parmi un sous-groupe d'éléments qui est constitué par le groupe d'éléments auquel un ou plusieurs éléments ont été retirés.

En outre, il faut comprendre que les éléments et / ou les caractéristiques d'un appareil, un procédé ou une utilisation, décrits dans le présent mémoire peuvent être combinés de toutes les manières possibles avec les autres éléments et/ou caractéristiques de l'appareil, du procédé, ou d'utilisation, explicitement ou implicitement, et cela sans sortir du cadre du présent mémoire, et doivent être considérés comme faisant partie intégrante du présent mémoire.

Dans les passages du présent mémoire qui vont suivre, différents modes de réalisation, ou variantes de l'invention sont définis plus en détail. Chaque mode, ou variante de réalisation ainsi définie, peut être combiné(e) à un autre mode, ou à une autre variante de réalisation, et ce pour chaque mode ou variante à moins d'indication contraire ou manifestement incompatible lorsque la gamme d'un même paramètre de valeur est disjoint. En particulier, toute variante indiquée comme étant préférée ou avantageuse peut être combinée avec une autre variante ou avec les autres variantes indiquées comme étant préférée(s) ou avantageuse(s).

Dans le présent mémoire, la description d'une plage de valeurs pour une variable, définie par une limite basse, ou une limite haute, ou par une limite basse et une limite haute, comprend aussi les modes de réalisation où la variable est choisie respectivement dans la plage de valeur : excluant la limite basse, ou excluant la limite haute, ou excluant la limite basse et la limite haute.

Dans le présent mémoire, la description de plusieurs plages successives de valeurs pour une même variable, comprend également la description de modes de réalisation où la variable est choisie dans toute autre plage intermédiaire incluse dans les plages successives. Ainsi par exemple lorsqu'il est décrit que « la grandeur X est généralement supérieure à 10, avantageusement supérieure à 15 », la présente description décrit aussi le mode de réalisation où : « la grandeur X est supérieure à 11 », ou aussi le mode de réalisation où : « la grandeur X est supérieure à 13,74 », etc... ; 11 ou 13,74 étant des valeurs comprises entre 10 et 15.

Le terme «comprenant» inclut «constitué essentiellement de » et aussi « constitué de ».

Dans le présent mémoire, l'utilisation de « un » ou « une » au singulier, comprend aussi le pluriel (« des »), et vice-versa, sauf si le contexte indique clairement le contraire. A titre d'exemple, "un additif" désigne un additif ou plus d'un additif.

Si le terme «environ» est utilisé avant une valeur quantitative, celui-ci correspond à une variation de ±10% de la valeur quantitative nominale, sauf indication contraire.

Le terme «moyenne» désigne une moyenne en nombre, sauf indication contraire.

Le terme « ppm » désigne la partie par million exprimée en poids (par exemple 1 ppm = 1 mg par kilogramme).

Le terme 'étalement granulométrique', ou en anglais 'span', d'une distribution granulométrique de particules correspond dans le présent mémoire au ratio suivant : (D90-D10)/ D50, le terme D90 désignant le diamètre pour lequel 90% en poids des particules ont une taille inférieure ou égale au D90, le terme D50 désignant le diamètre pour lequel 50% en poids des particules ont une taille inférieure ou égale au D50 (taille moyenne en poids), le terme D10 désignant le diamètre pour lequel 10% en poids des particules ont une taille inférieure ou égale à D10.

## Description détaillée de l'invention

La présente invention porte sur un procédé de préparation par cristallisation de particules de bicarbonate de métal alcalin à partir d'une solution de carbonate et/ ou de bicarbonate de métal alcalin (solution dénommée ci-après :

'la solution') en présence d'un additif dans la solution, permettant de modifier :

- la distribution granulométrique des particules, en particulier la fraction de 'fines' particules inférieures à 125 $\mu$m, ou la fraction de 'grosses' particules supérieures à 250 $\mu$m, ou l'étalement granulométrique' (ou 'span')
- ou leur PSE,
- ou leurs durées de dissolution
- ou leurs angles de talus,
- ou leur vitesse d'écoulement,
- ou leur indice d'usure.

En effet les inventeurs ont découvert que les divers additifs cités ci-après sont des modificateurs de cristallisation des cristaux de bicarbonates de métal alcalins pouvant être utilisés en faible quantité dans une solution de carbonate et/ou de bicarbonate de métal alcalin dans laquelle les cristaux de bicarbonate alcalin sont cristallisés.

On entend dans le présent mémoire par 'particules de bicarbonate de métal alcalin' des particules comprenant au moins 60%, avantageusement au moins 75%, plus avantageusement au moins 85%, encore plus avantageusement au moins 90% ou au moins 95% ou au moins 99% de bicarbonate de métal alcalin. En général dans la présente invention, les particules de bicarbonate de métal alcalin comprennent au plus 40%, avantageusement au plus 25%, plus avantageusement au plus 15%, encore plus avantageusement au plus 10% ou au plus 5% ou au plus 1% de carbonate de métal alcalin. Dans la présente invention, les particules de métal alcalin peuvent contenir aussi de faibles teneurs de bicarbonate d'ammonium, en général au plus 2%, ou au plus 1% ou au plus 0.7% de bicarbonate d'ammonium. Ceci est le cas notamment quand les particules sont cristallisées dans des solutions contenant de l'ammoniaque, comme lors de la cristallisation de bicarbonate de sodium dans le procédé Solvay à l'ammoniac, de fabrication de carbonate de sodium. Les particules de bicarbonate de métal alcalin obtenues dans ce procédé sont désignées en général par l'expression 'bicarbonate brut' (cf. Ullmann's Encyclopedia of Industrial Chemistry, 2012, Wiley-VCH Verlag GmbH & Co, Weinheim, « Sodium carbonate », Vol. 33 page 307).

Dans la présente invention, le bicarbonate de métal alcalin peut être du bicarbonate de : lithium, de sodium, de potassium, de rubidium ou de césium. Avantageusement le bicarbonate de métal alcalin est du bicarbonate de sodium ou du bicarbonate de sodium. Plus avantageusement le bicarbonate de métal alcalin est du bicarbonate de sodium. En particulier, dans la présente invention, les particules de bicarbonate de métal alcalin sont avantageusement des particules comprenant au moins 99% de bicarbonate de sodium et moins de 1% de carbonate de sodium ou d'eau.

La présente invention a été réalisée sur la découverte des effets des additifs mentionnés dans le présent mémoire et dont les différentes variantes de procédé et/ou de produit obtenu par les dites variantes de procédé sont décrits plus en détail ci-après.

Les additifs sont utilisés dans la présente invention à une concentration dans la solution d'au moins 1 ppm, avantageusement d'au moins 5 ppm, plus avantageusement d'au moins 10 ppm.

Les quantités en ppm (parties par million) sont exprimées en poids et correspondent à la quantité d'additif introduite dans la solution si la cristallisation est faite par batch (en discontinu) ou correspond à la proportion d'additif introduits rapportée à la solution alimentée dans l'appareil de cristallisation si la cristallisation est réalisée en continu. Elles correspondent aux mg de matière active d'additif par kg de solution.

Une faible concentration de ces additifs est suffisante pour avoir un effet remarquable sur les particules de bicarbonate obtenues. D'autre part une trop grande concentration d'additifs nuit à la pureté des bicarbonates de métal alcalin. Dans la présente invention l'additif est présent à une concentration d'au plus 200 ppm, avantageusement d'au plus 100 ppm, plus avantageusement d'au plus 70 ppm, encore plus avantageusement d'au plus 50 ppm.

Des quantités d'environ (c'est-à-dire à +/- 10%) de : 10 ppm, ou 20 ppm, ou 50 ppm d'additif dans la solution sont particulièrement avantageuses.

Toutefois les quantités d'additifs peuvent être ajustées afin d'ajuster la valeur désirée du paramètre, par exemple le PSE, ou le paramètre des refus granulométriques sur tamis, en particulier à 125 $\mu$m ou à 250 $\mu$m.

La solution de carbonate et/ou de bicarbonate de métal alcalin est de façon préférée une solution aqueuse comprenant de 1 à 30% en poids de carbonate de métal alcalin et/ou comprenant 1 à 18% en poids de bicarbonate de métal alcalin.

La cristallisation des particules selon l'invention peut se faire avec ensemencement ou sans ensemencement de cristaux de bicarbonate de métal alcalin.

Dans un mode préféré selon l'invention, la solution est ensemencée. Dans le cas d'une cristallisation batch avec ensemencement, une quantité d'ensemencement de l'ordre de 0.1 à 10% de cristaux de bicarbonate est introduite avant le début de la cristallisation des particules de bicarbonate selon l'invention. Dans le cas d'une cristallisation opérée en continue, la densité de suspension des cristaux de bicarbonate réalisant la production dans l'appareil de cristallisation, constitue l'ensemencement lui-même. Dans ce cas, des densités de suspension de particules de bicarbonate de métal alcalin rapporté au poids de la suspension de particules dans les eaux mères de cristallisation est en général de 0.1 à 25% en poids.

Dans un premier mode selon l'invention la cristallisation de particules de bicarbonate de métal alcalin est réalisée par refroidissement de la solution.

Dans un second mode selon l'invention la cristallisation de particules de bicarbonate de métal alcalin est réalisée par carbonatation de la solution avec du dioxyde de carbone.

Dans un troisième mode selon l'invention la cristallisation de particules de bicarbonate de métal alcalin est réalisée par évaporation d'au moins une partie de la solution.

Chacun des trois modes cités ci-dessus peuvent être dans la présente invention combinés. En particulier dans un quatrième mode selon l'invention la cristallisation de particules de bicarbonate de métal alcalin est réalisée par refroidissement et par carbonatation concomitants de la solution; ou par refroidissement et par carbonatation et par évaporation concomitants de la solution. Dans le cas où la cristallisation est opérée par carbonatation avec un gaz comprenant du dioxyde de carbone, l'injection du gaz peut ne pas être saturée par le solvant de la solution à la température de la suspension des particules cristallisant. Dans ce cas, l'injection du gaz s'accompagne d'une évaporation partielle du solvant de la solution. Ceci provoque aussi un refroidissement de la solution.

Dans chacun des modes ci-dessus, il est préféré dans la présente invention lorsqu'au moins deux phases liquides et gazeuses sont présentes lors de la préparation par cristallisation de particules que la phase continue soit la phase liquide et que la phase gazeuse soit une phase dispersée dans la phase liquide.

Dans chacun des modes ci-dessus lorsqu'il y a carbonatation de la solution, la carbonatation de la solution avec du dioxyde de carbone est réalisée avec un gaz comprenant en général: 10 à 100% de $CO_2$ en volume sur gaz sec, avantageusement au moins 20% de $CO_2$ en volume sur gaz sec, plus avantageusement au moins 30% de $CO_2$ en volume sur gaz sec, encore plus avantageusement au moins 35% de $CO_2$ en volume sur gaz sec

Dans la présente invention la préparation par cristallisation de particules de bicarbonate de métal alcalin est en général réalisée à une température comprise entre 20°C et 95°C. Il est avantageux que la température soit d'au moins 30°C. Il est aussi avantageux que la température soit d'au plus 90°C.

Le poids spécifique par écoulement des particules de bicarbonate de métal alcalin est mesuré selon le mode opératoire suivant : les particules sont introduites dans une trémie en acier lisse de forme tronconique (diamètre supérieur 53 mm, diamètre inférieur 21 mm, hauteur 58 mm) fermée sur sa partie inférieure par un obturateur constitué par une lamelle d'acier lisse horizontal. On ouvre ensuite le bas de la trémie en ôtant l'obturateur, et l'on recueille les particules dans un cylindre de 50 $cm^3$ (diamètre intérieur 37 mm, hauteur 46 mm) situé (sa partie supérieure) à moins de 5 cm sous l'obturateur. On arase ensuite l'excès de particules dépassant du cylindre, sans tasser la poudre, et en vérifiant que tout le cylindre est rempli de poudre à ras-bord, et l'on pèse le poids de la poudre contenue dans les 50 $cm^3$ et l'on exprime le poids spécifique par écoulement (« libre ») de la poudre en rapportant le poids apparent de la poudre sur le volume de 50 $cm^3$ que l'on exprime en kg/ litre ou kg/$m^3$.

Les exemples ci-après sont donnés à titre d'illustration de certains modes de réalisation de la présente invention. Ils ne sont en aucun cas limitatifs.

### Exemples

**Exemple 1** - Cristallisation par refroidissement de particules de bicarbonate de sodium - Contrôle du poids spécifique par écoulement libre.

Matériel utilisé : béchers de 500 ml à double enveloppe, agités par barreau magnétique à 350 tr/ min. Filtre büchner et pompe à vide de laboratoire. Conditions opératoires:

Tab. 1 - Conditions opératoires des essais.

| Solution initiale aqueuse concentrations | | Ensemencement | | Vitesse d'agitation |
|---|---|---|---|---|
| [NaHCO$_3$] visé | [Na$_2$CO$_3$] visé | Type | Quantité | |
| g/kg | g/kg | - | g | tr/min |
| 117 | 70 | BICAR 200-250 $\mu$m | 1 | 350 |

Le «BICAR» utilisé comme ensemencement est un bicarbonate de sodium de marque «BICAR® Codex» de qualité Pharmacopée, de la Sté SOLVAY tamisé entre 200 et 250 $\mu$m.

Tab. 2 - Conditions opératoires des essais (suite).

| Température | | | Temps de maturation à 30°C |
|---|---|---|---|
| Initiale | Vitesse de descente | Finale | |
| °C | °C/h | °C | min |
| 70 | 40 | 30 | 30 |

A l'issue de l'étape de cristallisation par refroidissement, la suspension de particules de bicarbonate est filtrée sur büchner et lavé avec 50 ml d'éthanol saturé en bicarbonate de sodium, pour enlever le gros des eaux mères de cristallisation. Les particules sont ensuite séchées à l'air libre pendant une nuit. Les agglomérats dus au séchage sont défaits sur un plateau inox avec un bouchon de caouthcouc avec une faible pression de la main, et la poudre obtenue est ensuite tamisée à 500 $\mu$m.

Résultats des Essais de référence sans additif

Tab. 3 - PSE des poudres de particules sans additif.

| Essai | Additif | PSE g/L |
|---|---|---|
| 12-2 | Pas d'additif | 403 |
| 12-3 | Pas d'additif | 422 |
| 12-4 | Pas d'additif | 425 |
| 12-5 | Pas d'additif | 423 |
| 12-6 | Pas d'additif | 452 |
| 22-1 | Pas d'additif | 436 |
| 22-2 | Pas d'additif | 426 |
| 22-3 | Pas d'additif | 439 |
| 22-4 | Pas d'additif | 412 |
| 22-5 | Pas d'additif | 420 |
| 22-6 | Pas d'additif | 443 |
| MOYENNE PSE | | 427 |
| ECART-TYPE | | 14 |
| CV | | 3% |

Ne sont présentés dans le tableau suivant (Tab. 4.a) que les additifs pour lesquels le PSE est supérieur au PSE moyen des essais de référence + 3 écart-types (ie > 470 kg/m$^3$). Par ailleurs, le ratio PSE add / PSE réf est le rapport du PSE du bicarbonate de sodium cristallisé en présence d'additif divisé par le PSE moyen du bicarbonate de sodium cristallisé sans additif (ie 427 kg/ m$^3$). Dans le tableau 4a les essais 16-1, 13-4 et 16-3 sont conformes à l'invention.

| Essai | Additif | [Additif] | PSE | PSE add / PSE réf |
|---|---|---|---|---|
| | | mg/kg | g/L | - |
| 13-3 | Bétaïne | 20 | 483 | 1,1 |
| 24-6 | Mirataine CBS | 20 | 486 | 1,1 |
| 31-5 | Rhodacal DSB | 20 | 486 | 1,1 |
| 31-2 | Rhodacal DSB | 20 | 488 | 1,1 |
| 15-4 | Acide polyvinysulfonique | 20 | 489 | 1,1 |
| 19-5 | Polyacrylate de sodium | 20 | 492 | 1,2 |
| 16-1 | Acide alginique | 20 | 498 | 1,2 |
| 13-4 | Carboxyméthylcellulose | 20 | 501 | 1,2 |

(suite)

| Essai | Additif | [Additif] | PSE | PSE add / PSE réf |
|---|---|---|---|---|
| | | mg/kg | g/L | - |
| 15-6 | Acide polyvinysulfonique | 20 | 502 | 1,2 |
| 19-2 | Polyacrylate de sodium | 20 | 504 | 1,2 |
| 27-2 | Soprophor CY/8 | 20 | 506 | 1,2 |
| 16-3 | Acide alginique | 20 | 513 | 1,2 |
| 19-1 | Lécithine de soja | 20 | 525 | 1,2 |
| 37-5 | Rhodacal BX-78 | 20 | 529 | 1,2 |
| 37-2 | Rhodacal BX-78 | 20 | 532 | 1,2 |
| 40-2 | Hexamétaphosphate de sodium | 20 | 539 | 1,3 |
| 26-5 | Geropon SDS | 20 | 542 | 1,3 |
| 37-4 | Rhodacal 330 | 20 | 552 | 1,3 |
| 19-3 | Lécithine de soja | 20 | 552 | 1,3 |
| 26-2 | Geropon SDS | 20 | 559 | 1,3 |
| 35-2 | Rhodacal DSB | 50 | 568 | 1,3 |
| 40-4 | Rhodacal BX-78 | 50 | 571 | 1,3 |
| 42-3 | Hexamétaphosphate de sodium | 20 | 574 | 1,3 |
| 37-6 | Rhodacal 330 | 20 | 575 | 1,3 |
| 40-6 | Rhodacal BX-78 | 50 | 576 | 1,3 |
| 42-6 | Hexamétaphosphate de sodium | 20 | 577 | 1,4 |
| 42-5 | Hexamétaphosphate de sodium | 20 | 578 | 1,4 |
| 19-6 | Hexamétaphosphate de sodium | 20 | 587 | 1,4 |
| 40-1 | Hexamétaphosphate de sodium | 20 | 592 | 1,4 |
| 35-5 | Rhodacal DSB | 50 | 596 | 1,4 |
| 42-1 | Hexamétaphosphate de sodium | 20 | 598 | 1,4 |
| 19-4 | Hexamétaphosphate de sodium | 20 | 600 | 1,4 |
| 40-3 | Hexamétaphosphate de sodium | 20 | 603 | 1,4 |
| 26-4 | Geropon T/77 | 20 | 609 | 1,4 |

Tab. 4.a - PSE des poudres de particules avec additif et comparatio avec et sans additif.

| Essai | Additif | [Additif] | PSE | PSE add / PSE réf |
|---|---|---|---|---|
| | | mg/kg | g/L | - |
| 42-4 | Hexamétaphosphate de sodium | 20 | 624 | 1,5 |
| 18-2 | Acide polyvinysulfonique | 50 | 640 | 1,5 |
| 41-4 | Rhodacal 330 | 50 | 640 | 1,5 |
| 26-6 | Geropon T/77 | 20 | 644 | 1,5 |
| 18-5 | Acide polyvinysulfonique | 50 | 646 | 1,5 |
| 41-6 | Rhodacal 330 | 50 | 664 | 1,6 |

(suite)

| Essai | Additif | [Additif] | PSE | PSE add / PSE réf |
|---|---|---|---|---|
| | | mg/kg | g/L | - |
| 21-4 | Acide polyvinysulfonique | 50 | 666 | 1,6 |
| 18-1 | Dodécyl sulfate de sodium | 10 | 686 | 1,6 |
| 21-6 | Acide polyvinysulfonique | 50 | 692 | 1,6 |
| 18-4 | Dodécyl sulfate de sodium | 50 | 722 | 1,7 |
| 14-4 | Dodécyl sulfate de sodium | 20 | 759 | 1,8 |
| 18-3 | Dodécyl sulfate de sodium | 10 | 765 | 1,8 |
| 18-6 | Dodécyl sulfate de sodium | 50 | 810 | 1,9 |
| 14-6 | Dodécyl sulfate de sodium | 20 | 839 | 2,0 |

Commentaires: (seulement l'acide alginique et le carboxyméthylcellulose sont conformes à l'invention):

- Pour 10 ppm d'additif (ppm = mg matière active / kg liquide initial) : 600 < PSE < 700 kg/m$^3$ (facteur 1.4 à 2.0) avec utilisation de dodécyl sulfate de sodium

- Pour 20 ppm d'additif (ppm = mg matière active / kg liquide initial) :

○ 470 < PSE < 600 kg/m$^3$ :

Bétaïne,

Mirataine CBS

Rhodacal DSB

Acide polyvinysulfonique

Polyacrylate de sodium de poids moléculaire moyen ≥ 8000 g/mol

Acide alginique

Carboxyméthylcellulo se

Soprophor CY/8

Rhodacal BX-78

Hexamétaphosphate de sodium

Geropon SDS

Rhodacal 330

Lécithine de soja

Geropon T/77

○ 600 < PSE < 700 kg/m$^3$ :

Geropon T/77

Hexamétaphosphate de sodium.

∘ PSE > 700 kg/m$^3$ :
Dodécyl sulfate de sodium.

- Pour 50 ppm d'additif (ppm = mg matière active / kg liquide initial) :

  ∘ 470 < PSE < 600 kg/m$^3$ avec utilisation de Rhodacal DSB, Rhodacal BX-78
  ∘ 630 < PSE < 898 kg/m$^3$ avec utilisation de polyacrylate de sodium de poids moléculaire moyen d'au moins 8000 g/mol
  ∘ 600 < PSE < 700 kg/m$^3$ avec utilisation d'acide polyvinysulfonique, Rhodacal 330
  ∘ PSE > 700 kg/m$^3$ avec utilisation de dodécyl sulfate de sodium.

**Exemple 2** - Cristallisation par refroidissement de particules de bicarbonate de sodium - Contrôle des refus tamis.

Matériel et Conditions opératoires : idem à celles de l'exemple 1 (cf. notamment Tableaux 1 et 2).
Résultats des Essais de référence sans additif :

Tab. 5 - Résultats des essais de référence sans additif - Refus sur tamis vibrant des poudres de particules.

| Essai | Additif | Fraction <125μm (wt%) | 125<F<250 μm (wt%) | F>250 μm (wt%) |
|---|---|---|---|---|
| | | | | |
| 12-1 | Pas d'additif | 21 | 64 | 14 |
| 12-2 | Pas d'additif | 22 | 62 | 16 |
| 12-3 | Pas d'additif | 28 | 61 | 11 |
| 12-4 | Pas d'additif | 23 | 53 | 24 |
| 12-5 | Pas d'additif | 27 | 62 | 11 |
| 12-6 | Pas d'additif | 31 | 58 | 11 |
| 22-1 | Pas d'additif | 26 | 57 | 17 |
| 22-2 | Pas d'additif | 25 | 59 | 16 |
| 22-3 | Pas d'additif | 32 | 55 | 12 |
| 22-4 | Pas d'additif | 18 | 60 | 22 |
| 22-5 | Pas d'additif | 29 | 59 | 13 |
| | MOYENNE | 26 | 59 | 15 |
| | ECART -TYPE | 4 | 3 | 5 |
| | Coef. Variation | 17% | 5% | 31% |

Résultats des essais avec additifs:
Ne sont présentés dans le tableau suivant (Tab. 6) que les additifs pour lesquels le passé à 125 μm est supérieur à 38 wt% (> moyenne des essais de référence sans additif + 3 écart-types). Par ailleurs, le ratio F add / F réf est le rapport de la fraction massique passée à 125 μm du bicarbonate de sodium cristallisé en présence d'additif divisé par la fraction massique passée à 125 μm moyenne du bicarbonate de sodium cristallisé sans additif (ie 26 wt%). Dans le tableau 6, seulement l'essai 27-3 est conforme à l'invention.

Tab. 6 - Résultats des essais avec additifs - Passé sur tamis vibrant des poudres de particules.

| Essai | Additif | [Additif] | F<125 μm | F add / F ref |
|---|---|---|---|---|
| | | mg/kg | wt% | - |
| 30-5 | Lubrophos LB/400-E | 20 | 65 | 2,5 |
| 41-6 | Rhodacal 330 | 50 | 62 | 2,4 |

(suite)

| Essai | Additif | [Additif] mg/kg | F<125 μm wt% | F add / F ref - |
|---|---|---|---|---|
| 28-6 | Rhodafac RM 510 | 20 | 53 | 2,1 |
| 35-3 | Lubrophos LB/400-E | 50 | 53 | 2,0 |
| 14-6 | Dodécyl sulfate de sodium | 20 | 53 | 2,0 |
| 27-6 | Repel-O-TEX SF2 | 20 | 53 | 2,0 |
| 18-3 | Dodécyl sulfate de sodium | 10 | 50 | 1,9 |
| 14-4 | Dodécyl sulfate de sodium | 20 | 48 | 1,9 |
| 21-5 | Magnésium | 20 | 47 | 1,8 |
| 41-4 | Rhodacal 330 | 50 | 46 | 1,8 |
| 18-4 | Dodécyl sulfate de sodium | 50 | 45 | 1,7 |
| 28-3 | Rhodasurf ON/870-E | 20 | 44 | 1,7 |
| 32-3 | Igepal CA 630 | 20 | 43 | 1,7 |
| 18-6 | Dodécyl sulfate de sodium | 50 | 43 | 1,7 |
| 34-3 | Antarox L-62 | 20 | 42 | 1,6 |
| 27-3 | Jaguar HP105 | 20 | 42 | 1,6 |
| 37-6 | Rhodacal 330 | 20 | 42 | 1,6 |

Les additifs des tableaux 7a, 7b et 8 ne sont pas conformes à l'invention.

Ne sont présentés dans le tableau suivant (Tab. 7) que les additifs pour lesquels le refus à 250 μm est supérieur au refus moyen à 250 μm + 3 écart-types (30 wt%) des bicarbonates de sodium des essais de référence sans additif. Par ailleurs, le ratio F add / F réf est le rapport de la fraction massique refusée à 250 μm du bicarbonate de sodium cristallisé en présence d'additif divisé par la fraction massique refusée à 250 μm moyenne du bicarbonate de sodium cristallisé sans additif (ie 15 wt%):

Tab. 7.a - Résultats des essais avec additifs - Refus sur tamis vibrant des poudres de particules.

| Essai | Additif | [Additif] mg/kg | F>250 μm wt% | F add / F ref - |
|---|---|---|---|---|
| 19-4 | HMP | 20 | 68 | 4,5 |
| 42-4 | HMP | 20 | 63 | 4,2 |
| 40-1 | HMP | 20 | 62 | 4,1 |
| 42-1 | HMP | 20 | 58 | 3,9 |
| 19-2 | Polyacrylate de sodium | 20 | 58 | 3,8 |
| 19-5 | Polyacrylate de sodium | 20 | 56 | 3,7 |
| 42-6 | HMP | 20 | 54 | 3,6 |
| 42-5 | HMP | 20 | 53 | 3,6 |
| 15-5 | Hexaméthylènediamine | 20 | 53 | 3,5 |
| 40-2 | HMP | 20 | 53 | 3,5 |
| 42-3 | HMP | 20 | 52 | 3,5 |
| 19-6 | HMP | 20 | 51 | 3,4 |
| 15-avr | Acide polyvinysulfonique | 20 | 51 | 3,4 |

(suite)

| Essai | Additif | [Additif] | F>250 $\mu$m | F add / F ref |
|---|---|---|---|---|
| | | mg/kg | wt% | - |
| 40-3 | HMP | 20 | 47 | 3,2 |

Sont présentés dans le tableau suivant (Tab.7.b) les résultats spécifiques obtenus avec des polyacrylates de sodium de différents poids moléculaires moyen compris entre 1800 et 1 250 000 g/mol et à diverses quantités ajoutées: 10, 20, 30, 50 ppm.

Tab. 7.b - Résultats des essais avec additifs de type polyacrylate de sodium de différents poids moléculaires moyens - Refus sur tamis vibrant des poudres de particules (F> 250 $\mu$m en wt.%).

| F> 250 $\mu$m (wt%) - Fonction du Poids molaire du Polyacrylate de sodium et de la quantité ajoutée d'additif | | | | |
|---|---|---|---|---|
| Poids molaire moyen Polyacrylate de Na (g/mol) | 10 ppm | 20 ppm | 30 ppm | 50 ppm |
| 1 800 | 7 | 3 | 7 | 9 |
| 2 100 | 4 | 2 | | 3 |
| 8 000 | 9 | 43 | 60 | 75 |
| 14 800 | 27 | 52 | 64 | 71 |
| 1 250 000 | 33 | 33 | 58 | 72 |

Ne sont présentés dans le tableau suivant (Tab. 8) que les additifs pour lesquels la fraction de particules entre 125 et 250 $\mu$m est supérieure à la fraction moyenne 125-250 $\mu$m + 3 écart-types des essais de référence sans additif (soit 68 wt%). Par ailleurs, le ratio F add / F réf est le rapport de la fraction massique 125-250 $\mu$m du bicarbonate de sodium cristallisé en présence d'additif divisé par la fraction massique 125-250 $\mu$m moyenne du bicarbonate de sodium cristallisé sans additif (ie 59 wt%) :

Tab.8 - Résultats des essais avec additifs - Refus sur tamis vibrant des poudres de particules.

| Essai | Additif | [Additif] | 125<F<250 $\mu$m | F add / F ref |
|---|---|---|---|---|
| | | mg/kg | wt% | - |
| 18-5 | Acide polyvinysulfonique | 50 | 76 | 1,3 |
| 21-4 | Acide polyvinysulfonique | 50 | 72 | 1,2 |
| 18-2 | Acide polyvinysulfonique | 50 | 70 | 1,2 |

Commentaires (seulement Jaguar HP 105 est suivant l'invention):

- Pour 10 ppm d'additif (ppm = mg matière active / kg liquide initial):
  ◦ Production de fins avec les additifs suivants :
    ▪ Dodécyl sulfate de sodium
- Pour 20 ppm d'additif (ppm = mg matière active / kg liquide initial) :

  ◦ Production de fins (F<125 $\mu$m) avec les additifs suivants :

    ▪ Lubrophos LB/400-E
    ▪ Rhodacal 330
    ▪ Rhodafac RM 510
    ▪ Dodécyl sulfate de sodium
    ▪ Repel-O-TEX SF2
    ▪ Magnésium
    ▪ Rhodasurf ON/870-E

- Igepal CA 630
- Antarox L-62
- Jaguar HP105

○ Production de gros (F> 250 μm) avec les additifs suivants :

- Hexamétaphosphate de sodium
- Polyacrylate de sodium
- Hexaméthylènediamine
- Acide polyvinysulfonique

Pour le polyacrylate de sodium on peut voir au tableau 7.b qu'il existe pour la génération de grosses particules, une masse moléculaire moyenne limite pour les homo-polymères d'acide polyacrylique. On constate en effet qu'à partir de 8 000 g/mol, la fraction granulométrique supérieure à 250 μm (F> 250 μm) est quasi constante aux concentrations d'additif testées.

- Pour 50 ppm d'additif (ppm = mg matière active / kg liquide initial) :

○ Production de fins (F<125 μm) avec les additifs suivants :

- Rhodacal 330
- Lubrophos LB/400-E
- Dodécyl sulfate de sodium

○ Production d'un Bicar à étalement granulométrique réduit :
- Acide polyvinysulfonique

- Pour 20 ppm d'additif (ppm = mg matière active / kg liquide initial) : on remarque que les organo-phosphates tels:

- Lubrophos LB/400-E
- Rhodafac RM 510

augmentent significativement le nombre de fines passant au tamis de 125μm. **Exemple 3** - Cristallisation par carbonatation de particules de bicarbonate de sodium.

Le présent exemple illustre une carbonatation en continu de fabrication de bicarbonate de sodium sans et avec additifs.

Conditions opératoires:

La préparation par cristallisation de particules de bicarbonate de sodium par carbonatation est réalisée dans un réacteur fermé de précipitation de 5 litres utiles, agité de 800 (référencés 'a') ou 1070 tours par minute (référencés 'b'). Une solution alimentaire contenant 100 grammes de bicarbonate de sodium par kilogrammes de solution aqueuse et 130 grammes de carbonate de sodium par kilogrammes de solution aqueuse est injectée en continu au centre du réacteur agité à un débit de 3,3 litres par heure. Du dioxyde de carbone est injecté dans le réacteur à un débit de 750 normo-litres par heure par l'intermédiaire d'une canne percée placée dans le bas du réacteur sous l'agitateur. La suspension formée de particules de bicarbonate de sodium est continuellement soutirée à la base du réacteur à un débit de 3,3 litres par heure afin de maintenir un niveau constant dans le réacteur. Le réacteur de cristallisation par carbonatation est placée sous pression relative du ciel de gaz 200 à 600 mbars relatifs. L'additif est préparé en une solution de 1% massique de matière active dans de l'eau de telle manière que les quantités d'additif exprimées ici soient en masse de matière active par masse de solution à cristalliser. La solution d'additif est injectée dans le cœur de la suspension agitée.

Pour le polyacrylate de sodium, pas conforme à l'invention, le poids moléculaires moyen de l'additif utilisé était de 5100 g/ mol (inférieur à 8000 g/mol).

Après établissement d'un régime continu, on récupère partie de la suspension de cristaux qui est filtrée sur filtre Büchner et papier filtre. La solution filtrée comprend environ 125 grammes de bicarbonate de sodium par kilogrammes de solution aqueuse et 65 grammes de carbonate de sodium par kilogrammes de solution aqueuse. Les particules de bicarbonate de sodium obtenues sur büchner sont lavées avec 250 ml d'éthanol puis séchées de la même façon qu'à l'exemple 1. La poudre de particules ainsi obtenue est caractérisée. Les mesures suivantes sont réalisées:

- Passant sur tamis à 125 $\mu$m : (% massique)
- Refus sur tamis à 250 $\mu$m : (% massique)
- Granulométrie laser (D10, D50, D90 et span) ($\mu$m)
- Poids spécifique par écoulement (PSE) (kg /m3 ou g/L)
- Durée de dissolution (s)
- Angle de talus (°)
- Test d'écoulement (numéro de tube au test 'Degussa')
- Indice d'usure (IU en %).

Mode opératoire de la mesure de la durée de dissolution :

La durée de dissolution (comparative entre les différents échantillons) est mesurée avec une cellule conductimétrique plongée dans un bécher agité avec 1 litre d'eau déminéralisée maintenue à 25 °C (+/- 1°C). L'agitation est réalisée avec une hélice marine à 350 tours par minute. 10 grammes de particules de bicarbonate de sodium sont introduits dans la solution, celles-ci se dissolvent et induisent une augmentation de la conductivité de la solution. La durée de dissolution correspond au temps nécessaire pour atteindre 95% de la valeur finale de la conductivité en solution.

Mode opératoire de sur la mesure de l'angle de talus :

L'angle de talus, des poudres obtenues, est mesuré après formation d'un cône de déversement que la poudre forme en chutant d'un tamis de taille de 710 $\mu$m sur un cylindre de 50 mm de diamètre et de 80 mm de hauteur. La hauteur du tamis par rapport au au sommet du cône doit être maintenue entre 2 et 3 cm. L'angle de talus AT (°) est calculé à partir de la mesure de la hauteur H (mm) du tas de poudre restant sur le cône :

$$[AT] = \tan^{-1}(H/28) * (180/\pi)$$

Mode opératoire de la mesure de la fluidité par test d'écoulement :

La mesure de la fluidité consiste à déterminer l'écoulement d'un échantillon de poudre, contenue dans un récipient conique, à travers un orifice de diamètre calibré. Sept cônes, de 125 mm de hauteur et de 43,5 mm diamètre au point haut présentent un orifice de diamètre d'écoulement croissant : 2,4 mm (tube 1), 4,9 mm (tube 2), 8,0 (tube 3), 9,8 mm (tube 4), 12,3 (tube 5), 15,2 (tube 6) et 18,1 mm (tube 7). Le test permet de déterminer à partir de quelle ouverture minimale (tube 1 à 7) le produit peut s'écouler.

Mode opératoire de la mesure de la durée de l'indice d'usure :

L'indice d'usure à 63 $\mu$m consiste en la différence de la mesure relative de masse de poudre inférieure à 63 $\mu$m avant et après un effort d'usure. Le test d'usure consiste à faire passer 100 grammes de poudre dans un tambour rotatif en acier inoxydable de 150 mm de diamètre interne, de 22 cm de longueur interne, et équipé de 3 pales de 35 mm de large. La rotation du tambour à 40 tours par minute dure 20 minutes.

Commentaires :

Les tableaux ci-après (Tab. 9.a et 9.b) reprennent les résultats obtenus : Les essais avec additifs référencés (a) réalisés à une vitesse d'agitation de 800 tr/min ou référencés (b) réalisés à 1070 tr / min doivent être comparés aux essais de référence sans additif respectifs:

- essai 1(a) à 800 tr/min
- essai 2(b) à 1070 tr/min.

D'autre part, une mesure des surfaces spécifiques (surfaces BET) sur les particules de bicarbonate de sodium obtenues aux essais sans additifs : 1(a) et 1 (b) et essai 6(a) (polyacrylate de sodium à 500 ppm) donnent les valeurs suivantes :

- essai 1(a) et essai 2(b) (sans additif) : BET comprise entre 0.05 et 0.15 m$^2$/g,
- essai 6(a) (polyacrylate de sodium à 500 ppm) : 1.4 m$^2$/g.

On peut remarquer notamment qu'en carbonatation :

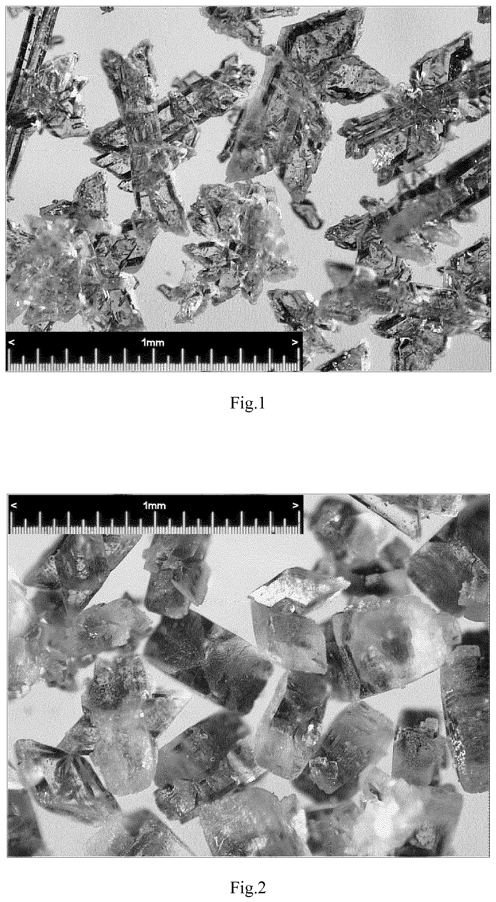

- Le polyacrylate (poids moléculaire moyen : 5100 g/mol.) ajouté à 5, 10, 50 et 500 ppm, et l'hexamétaphosphate de sodium à 50 ppm font baisser la granulométrie des particules de bicarbonate et le PSE. Les angles de talus sont augmentés. Les durées de dissolution sont diminuées sauf à forte addition en polyacrylate à 500 ppm - Essai 6(a) où la durée de dissolution est augmentée.
- Les phosphates : l'hexamétaphosphate de sodium à 50 ppm fait baisser la granulométrie des particules de bicarbonate et le PSE.
- Le sulfate de sodium à 500 ppm augmente la granulométrie des particules et augmente le PSE.
- Les polysaccharides, selon l'invention, tel l'acide alginique à 10, 20 et 50 ppm et le carboxyméthylcellulose à 20 ppm (essais 9 à 12) augmentent la granulométrie des particules, diminue le span, augmentent en général le PSE, et augmentent le temps de dissolution. L'indice d'usure est amélioré avec une baisse des fines < 63 $\mu$m générées lors du test d'usure. Des photographies des particules de bicarbonate de sodium, prises au microscope optique, indiquent une forme plus compacte et parallélépipédique en présence de polysaccharides (Fig.2 : essai avec acide alginique à 50 ppm - Essai 11(b)) alors que les particules de bicarbonate sans additif sont en forme plus allongées en aiguilles (Fig.1).
- La bétaïne (amine quaternaire) à 10, 20 et 50 ppm augmente la granulométrie des particules de bicarbonate de sodium, diminue le span, augmente la durée de dissolution, et augmente l'indice d'usure.

Dans le cas où la divulgation des brevets, des demandes de brevets et de publications qui sont incorporés ici par référence, engendrerait un conflit dans la compréhension d'un terme le rendant peu clair, le présent mémoire descriptif prévaut.

Tableau 9.a - Exemple 3 - Résultats des essais de carbonatation (F < 125 $\mu$m, F> 250 $\mu$m, D10, D50, D90, et span des particules de bicarbonate de sodium obtenues)

| Essai | Additif | Additif (mg/kg) | Vitesse Agitation (Tr/min) | Fraction < 125 $\mu$m (% w/w) | Fraction > 250 $\mu$m (% w/w) | D10 ($\mu$m) | D50 ($\mu$m) | D90 ($\mu$m) | SPAN |
|---|---|---|---|---|---|---|---|---|---|
| 1 (a) | Pas d'additif (Ref.a) | - | 800 | 7 | 63 | 138 | 290 | 504 | 1,26 |
| 2 (b) | Pas d'additif (Ref.b) | - | 1070 | 24 | 33 | 75 | 197 | 329 | 1,29 |
| 3 (a) | Polyacrylate de soude | 5 | 800 | 12 | 62 | 114 | 301 | 357 | 1,50 |
| 4 (a) | Polyacrylate de soude | 10 | 800 | 23 | 47 | 70 | 237 | 433 | 1,53 |
| 5 (a) | Polyacrylate de soude | 50 | 800 | 18 | 54 | 5 | 35 | 129 | 3,52 |
| 6 (a) | Polyacrylate de soude | 500 | 800 | 18 | 64 | 3 | 43 | 563 | 12,93 |
| 7 (a) | Hexamétaphosphate de sodium | 50 | 800 | 17 | 63 | 9 | 53 | 133 | 2,36 |
| 8 (b) | Sulfate de sodium | 500 | 1070 | 13 | 33 | 113 | 207 | 320 | 1,00 |
| 9 (b) | Acide alginique | 10 | 1070 | 13 | 41 | 111 | 224 | 339 | 1,02 |
| 10 (a) | Acide alginique | 20 | 800 | 8 | 62 | 131 | 283 | 464 | 1,18 |
| 11 (b) | Acide alginique | 50 | 1070 | 10 | 33 | 126 | 215 | 328 | 0,94 |
| 12 (a) | Carboxyméthylcellulose | 20 | 800 | 5 | 76 | 159 | 350 | 564 | 1,16 |
| 13 (b) | Lécithine de soja | 20 | 1070 | 22 | 7 | 90 | 180 | 246 | 0,86 |
| 14 (b) | Bétaïne | 10 | 1070 | 8 | 67 | 137 | 300 | 477 | 1,13 |
| 15 (b) | Bétaïne | 20 | 1070 | 10 | 39 | 124 | 227 | 309 | 0,82 |
| 16 (b) | Bétaïne | 50 | 1070 | 7 | 60 | 137 | 274 | 416 | 1,02 |

Tableau 9.b - Exemple 3 - Résultats des essais de carbonatation (suite) (PSE, Durée de dissolution, Angle de talus, Fluidité d'écoulement, Indice d'usure)

| Essai | Additif | Additif (mg/ kg) | Vitesse Agitation (Tr/min) | PSE (kg/m3) | Durée dissolution (s) | Angle Talus (°) | Fluidité Ecoulement (n° tube) | Indice d'usure à 63 $\mu$m (%) |
|---|---|---|---|---|---|---|---|---|
| 1 (a) | Pas d'additif (Ref.a) | - | 800 | 908 | 33 | 34 | 2 | 0,13 |
| 2 (b) | Pas d'additif (Ref.b) | - | 1070 | 732 | 22 | 41 | 2 | 0,95 |
| 3 (a) | Polyacrylate de soude | 5 | 800 | 796 | 35 | 40 | 2 | 1,45 |
| 4 (a) | Polyacrylate de soude | 10 | 800 | 511 | 19 | 41 | 5 | 1,68 |
| 5 (a) | Polyacrylate de soude | 50 | 800 | 324 | 17 | 63 | 8 | 0,97 |
| 6 (a) | Polyacrylate de soude | 500 | 800 | 415 | 43 | 57 | - | - |
| 7 (a) | Hexamétaphosphate de sodium | 50 | 800 | 337 | 14 | 65 | - | 2,05 |
| 8 (b) | Sulfate de sodium | 500 | 1070 | 851 | 26 | 37 | 1 | 0,76 |
| 9 (b) | Acide alginique | 10 | 1070 | 961 | 31 | 37 | 1 | 0,91 |
| 10 (a) | Acide alginique | 20 | 800 | 724 | 34 | 39 | 2 | - |
| 11 (b) | Acide alginique | 50 | 1070 | 990 | 30 | 36 | 1 | 0,51 |
| 12 (a) | Carboxyméthylcellulose | 20 | 800 | 585 | 36 | 41 | 3 | - |
| 13 (b) | Lécithine de soja | 20 | 1070 | 871 | 26 | 39 | 1 | 0,75 |
| 14 (b) | Bétaïne | 10 | 1070 | 717 | 28 | 39 | 2 | 1,47 |
| 15 (b) | Bétaïne | 20 | 1070 | 773 | 25 | 39 | 1 | 0,96 |
| 16 (b) | Bétaïne | 50 | 1070 | 736 | 26 | 39 | 2 | 1,03 |

**Revendications**

1. Procédé de préparation par cristallisation de particules de bicarbonate de métal alcalin à partir d'une solution de carbonate et/ ou de bicarbonate de métal alcalin (solution dénommée ci-après : 'la solution') en présence d'un additif dans la solution, **caractérisé en ce que**:

   - l'additif est choisi parmi l'hydroxypropylguar, l'acide alginique ou ses sels tels de sodium ou de calcium ou de cuivre et la carboxymethylcellulose;
   - l'additif est présent dans la solution à une concentration d'au moins 1 ppm, avantageusement d'au moins 5 ppm, plus avantageusement d'au moins 10 ppm.

2. Procédé selon la revendication 1 dans lequel l'additif est est présent à une concentration d'au plus 200 ppm, avantageusement d'au plus 100 ppm, plus avantageusement d'au plus 70 ppm..

3. Procédé selon l'une quelconque des revendications 1 ou 2, dans lequel la cristallisation de particules de bicarbonate de métal alcalin est réalisée par refroidissement de la solution, préférentiellement dans lequel le refroidissement de la solution est réalisé entre 70° et 30°C.

4. Procédé selon l'une quelconque des revendications 1 à 3 dans lequel la cristallisation de particules de bicarbonate de métal alcalin est réalisée par carbonatation de la solution avec du dioxyde de carbone, préférentiellement dans lequel la carbonatation de la solution est réalisée à une température d'au moins 20°C, avantageusement au moins 30°C, et préférentiellement d'au plus 95°C, plus préférentiellement d'au plus 90°C.

5. Procédé selon l'une quelconque des revendications 1 à 4 dans lequel la cristallisation de particules de bicarbonate de métal alcalin est réalisée par évaporation d'au moins une partie de la solution.

6. Procédé selon l'une quelconque des revendications 1 à 5 dans lequel la cristallisation de particules de bicarbonate de métal alcalin est réalisée par refroidissement et par carbonatation concomitants de la solution; ou par refroidissement et par carbonatation et par évaporation concomitants de la solution.

7. Procédé selon l'une quelconque des revendications 4 ou 6 dans lequel la carbonatation de la solution avec du dioxyde de carbone est réalisée avec un gaz comprenant : 10 à 100% de $CO_2$ en volume sur gaz sec, avantageusement au moins 20% de $CO_2$ en volume sur gaz sec, plus avantageusement au moins 30% de $CO_2$ en volume sur gaz sec, encore plus avantageusement au moins 35% de $CO_2$ en volume sur gaz sec.

8. Procédé selon l'un quelconque des revendications 1 à 7, réalisé à une température comprise entre 20°C et 95°C, de préférence entre 30 et 90°C.

9. Procédé selon l'une quelconque des revendications 1 à 8 dont l'ajout de l'additif est réalisé pour contrôler ou modifier :

   • la granulométrie (telle le D10, le D50, le D90 ou le span), ou
   • le passant ou le refus sur tamis à 125 $\mu$m, ou
   • le passant ou le refus sur tamis à 250 $\mu$m.

   des particules de bicarbonate de métal alcalin obtenues après séparation de la solution de cristallisation et des particules de bicarbonate alcalin.

10. Procédé selon l'une quelconque des revendications 1 à 9 dont l'ajout de l'additif est réalisé pour contrôler ou modifier :

    • la durée de dissolution, ou
    • le poids spécifique par écoulement (PSE), ou
    • la vitesse d'écoulement dans un orifice calibré,
    • l'indice d'usure,

    des particules de bicarbonate de métal alcalin obtenues après séparation de la solution de cristallisation et des particules de bicarbonate alcalin, puis séchage des particules de bicarbonate de métal alcalin.

11. Procédé selon la revendication 10 selon lequel l'additif est l'acide alginique ou la carboxyméthylcellulose, et la cristallisation est réalisée par refroidissement, et l'ajout de l'additif permet d'augmenter le PSE des particules de bicarbonate de métal alcalin d'au moins 10%, ou d'au moins 20% par rapport au PSE de particules de bicarbonate de métal alcalin obtenues dans les mêmes conditions de cristallisation mais sans ajout d'additif.

12. Procédé selon la revendication 10 selon lequel l'additif est l'acide alginique, et la cristallisation est réalisée par carbonatation, et l'ajout de l'additif permet d'augmenter le PSE des particules de bicarbonate de métal alcalin d'au moins 10%, ou d'au moins 20% par rapport au PSE de particules de bicarbonate de métal alcalin obtenues dans les mêmes conditions de cristallisation mais sans ajout d'additif.

13. Procédé selon la revendication 10 selon lequel l'additif est de l'hydroxypropylguar, ou est du carboxyméthylcellulose, et la cristallisation est réalisée par carbonatation, et l'ajout de l'additif permet de diminuer le PSE des particules de bicarbonate de métal alcalin est d'au moins 10%, ou d'au moins 15% par rapport au PSE de particules de bicarbonate de métal alcalin obtenues dans les mêmes conditions de cristallisation mais sans ajout d'additif.

14. Procédé selon l'une quelconque des revendications 1 à 10 dans lequel l'additif est choisi parmi : l'acide alginique ou la carboxyméthylcellulose, et dans lequel l'ajout d'additif permet de:

  • augmenter la granulométrie (telle le D10, le D50, le D90) ou diminuer le span, ou
  • diminuer le passant sur tamis à 125 μm, ou
  • augmenter le refus sur tamis à 250 μm, ou
  • diminuer la durée de dissolution, ou
  • augmenter le poids spécifique par écoulement (PSE), ou
  • diminuer l'indice d'usure,

des particules de bicarbonate de métal alcalin par rapport à une même préparation qui serait faite sans additif, préférentiellement dans lequel la cristallisation des particules de bicarbonate alcalin est réalisée par refroidissement et/ou par carbonatation.

15. Particule de bicarbonate de métal alcalin susceptible d'être obtenue par le procédé selon l'une quelconque des revendications 1 à 14 et comprenant au moins 10 ppm, avantageusement au moins 20 ppm de l'additif.

**Patentansprüche**

1. Verfahren zur Herstellung von Partikeln von Alkalimetallhydrogencarbonat mittels Kristallisation, ausgehend von einer Lösung von Alkalimetallcarbonat und/oder -hydrogencarbonat (wobei diese Lösung nachstehend als 'die Lösung' bezeichnet wird) in Gegenwart eines in der Lösung vorliegenden Zusatzstoffs, **dadurch gekennzeichnet, dass**:

    - der Zusatzstoff aus Hydroxypropylguar, Alginsäure oder deren Salzen wie etwa von Natrium oder von Calcium oder von Kupfer sowie aus Carboxymethylcellulose ausgewählt ist;
    - der Zusatzstoff in der Lösung in einer Konzentration von mindestens 1 ppm, vorteilhafterweise von mindestens 5 ppm, auf noch vorteilhaftere Weise von mindestens 10 ppm vorliegt.

2. Verfahren nach Anspruch 1, wobei der Zusatzstoff in einer Konzentration von höchstens 200 ppm, vorteilhafterweise von höchstens 100 ppm, auf noch vorteilhafterer Weise von höchstens 70 ppm vorliegt.

3. Verfahren nach einem beliebigen der Ansprüche 1 oder 2, wobei die Kristallisation von Partikeln von Alkalimetallhydrogencarbonat erfolgt, indem die Lösung abgekühlt wird, wobei das Abkühlen der Lösung vorzugsweise zwischen 70° und 30 °C durchgeführt wird.

4. Verfahren nach einem beliebigen der Ansprüche 1 bis 3, wobei die Kristallisation von Partikeln von Alkalimetallhydrogencarbonat erfolgt, indem die Lösung eine Carbonatisierung mit Kohlendioxid erfährt, wobei die Carbonatisierung der Lösung vorzugsweise bei einer Temperatur von mindestens 20 °C, vorteilhafterweise von mindestens 30 °C sowie vorzugsweise von höchstens 95 °C, mit größerem Vorzug von höchstens 90 °C durchgeführt wird.

5. Verfahren nach einem beliebigen der Ansprüche 1 bis 4, wobei die Kristallisation von Partikeln von Alkalimetallhydrogencarbonat erfolgt, indem mindestens ein Teil der Lösung verdampft wird.

6. Verfahren nach einem beliebigen der Ansprüche 1 bis 5, wobei die Kristallisation von Partikeln von Alkalimetallhydrogencarbonat durch Abkühlen unter gleichzeitiger Carbonatisierung der Lösung; oder durch Abkühlen unter gleichzeitiger Carbonatisierung und gleichzeitigem Eindampfen der Lösung, erfolgt.

7. Verfahren nach einem beliebigen der Ansprüche 4 oder 6, wobei die Carbonatisierung der Lösung mit Kohlendioxid mittels eines Gases erfolgt, das Folgendes umfasst: 10 bis 100 % an CO2 nach Volumen bezogen auf das wasserfreie Gas, vorteilhafterweise mindestens 20 % an CO2 nach Volumen bezogen auf das wasserfreie Gas, auf noch vorteilhaftere Weise mindestens 30 % an CO2 nach Volumen bezogen auf das wasserfreie Gas, auf wiederum vorteilhaftere Weise mindestens 35 % an CO2 nach Volumen bezogen auf das wasserfreie Gas.

8. Verfahren nach einem beliebigen der Ansprüche 1 bis 7, wobei es bei einer Temperatur im Bereich von 20 °C bis 95 °C, vorzugsweise von 30 bis 90 °C, durchgeführt wird.

9. Verfahren nach einem beliebigen der Ansprüche 1 bis 8, wobei der Zusatzstoff hinzugefügt wird, um Folgendes zu steuern oder zu verändern:

   • die Korngrößenverteilung (wie etwa den D10-, den D50-, den D90-Wert oder den Kennwert der Verteilungsbreite (span)), oder
   • den durchgehenden beziehungsweise zurückgehaltenen Anteil auf einem 125-$\mu$m-Sieb, oder
   • den durchgehenden beziehungsweise zurückgehaltenen Anteil auf einem 250-$\mu$m-Sieb

   der Partikel von Alkalimetallhydrogencarbonat, wie sie erhalten werden, nachdem die Kristallisationslösung und die Alkalihydrogencarbonatpartikel getrennt wurden.

10. Verfahren nach einem beliebigen der Ansprüche 1 bis 9, wobei der Zusatzstoff hinzugefügt wird, um Folgendes zu steuern oder zu verändern:

    • die Auflösungsdauer, oder
    • das spezifische Schüttgewicht (PSE-Wert), oder
    • die Fließgeschwindigkeit durch eine Öffnung von bestimmter Weite,
    • den Verschleißkennwert

    der Partikel von Alkalimetallhydrogencarbonat, wie sie erhalten werden, nachdem zunächst die Kristallisationslösung und die Alkalihydrogencarbonatpartikel getrennt wurden und dann die Partikel von Alkalimetallhydrogencarbonat getrocknet wurden.

11. Verfahren nach Anspruch 10, wobei es sich bei dem Zusatzstoff um Alginsäure oder Carboxymethylcellulose handelt und die Kristallisation durch Abkühlen erfolgt und das Hinzufügen des Zusatzstoffs es ermöglicht, den PSE-Wert der Partikel von Alkalimetallhydrogencarbonat um mindestens 10 %, oder um mindestens 20 %, gegenüber dem PSE-Wert von Partikeln von Alkalimetallhydrogencarbonat zu erhöhen, wie sie unter denselben Kristallisationsbedingungen, aber ohne Hinzufügen des Zusatzstoffs, erhalten werden.

12. Verfahren nach Anspruch 10, wobei es sich bei dem Zusatzstoff um Alginsäure handelt und die Kristallisation durch Carbonatisierung erfolgt und das Hinzufügen des Zusatzstoffs es ermöglicht, den PSE-Wert der Partikel von Alkalimetallhydrogencarbonat um mindestens 10 %, oder um mindestens 20 %, gegenüber dem PSE-Wert von Partikeln von Alkalimetallhydrogencarbonat zu erhöhen, wie sie unter denselben Kristallisationsbedingungen, aber ohne Hinzufügen des Zusatzstoffs, erhalten werden.

13. Verfahren nach Anspruch 10, wobei es sich bei dem Zusatzstoff um Hydroxypropylguar oder um Carboxymethylcellulose handelt und die Kristallisation durch Carbonatisierung erfolgt und das Hinzufügen des Zusatzstoffs es ermöglicht, den PSE-Wert der Partikel von Alkalimetallhydrogencarbonat um mindestens 10 %, oder um mindestens 15 %, ist gegenüber dem PSE-Wert von Partikeln von Alkalimetallhydrogencarbonat zu erhöhen, wie sie unter denselben Kristallisationsbedingungen, aber ohne Hinzufügen des Zusatzstoffs, erhalten werden.

14. Verfahren nach einem beliebigen der Ansprüche 1 bis 10, wobei der Zusatzstoff aus den folgenden ausgewählt ist: Alginsäure und Carboxymethylcellulose, und wobei das Hinzufügen des Zusatzstoffs es ermöglicht:

    • die Korngrößenverteilung (wie etwa den D10-, den D50-, den D90-Wert) oder den Kennwert der Verteilungsbreite (span) zu erhöhen, oder
- den durchgehenden Anteil auf einem 125-μm-Sieb zu verringern, oder
- den zurückgehaltenen Anteil auf einem 250-μm-Sieb zu erhöhen, oder
- die Auflösungsdauer zu verringern, oder
- das spezifische Schüttgewicht (PSE-Wert) zu erhöhen, oder
- den Verschleißkennwert zu verringern,

welche(n) die Partikel von Alkalimetallhydrogencarbonat aufweisen, gegenüber einer gleichartigen Zubereitung, die ohne Zusatzstoff hergestellt würde, wobei die Kristallisation der Partikel von Alkalimetallhydrogencarbonat vorzugsweise durch Abkühlen und/oder durch Carbonatisierung erfolgt.

15. Partikel von Alkalimetallhydrogencarbonat, der mittels des Verfahrens nach einem beliebigen der Ansprüche 1 bis 14 hergestellt werden kann und mindestens 10 ppm, vorteilhafterweise mindestens 20 ppm, des Zusatzstoffs umfasst.

## Claims

1. Method for producing alkali metal bicarbonate particles by crystallization from a solution of alkali metal carbonate and/or bicarbonate (solution hereinafter referred to as: "the solution") in the presence of an additive in the solution, **characterized in that**:

   - the additive is selected from hydroxypropyl guar, alginic acid or its salts such as the sodium or calcium or copper salts, and carboxymethylcellulose;
   - the additive is present in the solution at a concentration of at least 1 ppm, advantageously of at least 5 ppm, more advantageously of at least 10 ppm.

2. Method according to Claim 1, in which the additive is present at a concentration of at most 200 ppm, advantageously of at most 100 ppm, more advantageously of at most 70 ppm.

3. Method according to either one of Claims 1 and 2, in which the crystallization of alkali metal bicarbonate particles is carried out by cooling the solution, preferentially in which the cooling of the solution is carried out between 70° and 30°C.

4. Method according to any one of Claims 1 to 3, in which the crystallization of alkali metal bicarbonate particles is carried out by carbonation of the solution with carbon dioxide, preferentially in which the carbonation of the solution is carried out at a temperature of at least 20°C, advantageously at least 30°C, and preferentially of at most 95°C, more preferentially of at most 90°C.

5. Method according to any one of Claims 1 to 4, in which the crystallization of alkali metal bicarbonate particles is carried out by evaporation of at least one part of the solution.

6. Method according to any one of Claims 1 to 5, in which the crystallization of alkali metal bicarbonate particles is carried out by concomitant cooling and carbonation of the solution, or by concomitant cooling and carbonation and evaporation of the solution.

7. Method according to either one of Claims 4 and 6, in which the carbonation of the solution with carbon dioxide is carried out with a gas comprising: 10 to 100% of $CO_2$ by volume on a dry gas basis, advantageously at least 20% of $CO_2$ by volume on a dry gas basis, more advantageously at least 30% of $CO_2$ by volume on a dry gas basis, even more advantageously at least 35% of $CO_2$ by volume on a dry gas basis.

8. Method according to any one of Claims 1 to 7, carried out at a temperature of between 20°C and 95°C, preferably between 30 and 90°C.

9. Method according to any one of Claims 1 to 8, in which the addition of the additive is carried out for controlling or modifying:

   - the particle size (such as D10, D50, D90 or the span), or

• the undersize or the oversize on a sieve of 125 $\mu$m, or
• the undersize or the oversize on a sieve at 250 $\mu$m,

of the alkali metal bicarbonate particles obtained after separation of the crystallization solution and of the alkali bicarbonate particles.

10. Method according to any one of Claims 1 to 9, in which the addition of the additive is carried out for controlling or modifying:

   • the dissolution time, or
   • the flow density (FD), or
   • the flow rate in a calibrated orifice,
   • the wear index,

of the alkali metal bicarbonate particles obtained after separation of the crystallization solution and of the alkali bicarbonate particles, followed by drying of the alkali metal bicarbonate particles.

11. Method according to Claim 10, according to which the additive is alginic acid or carboxymethylcellulose, and the crystallization is carried out by cooling, and the addition of the additive makes it possible to increase the FD of the alkali metal bicarbonate particles by at least 10%, or by at least 20%, relative to the FD of alkali metal bicarbonate particles obtained under the same crystallization conditions but without addition of additive.

12. Method according to Claim 10, according to which the additive is alginic acid, and the crystallization is carried out by carbonation, and the addition of the additive makes it possible to increase the FD of the alkali metal bicarbonate particles by at least 10%, or by at least 20%, relative to the FD of alkali metal bicarbonate particles obtained under the same crystallization conditions but without addition of additive.

13. Method according to Claim 10, according to which the additive is hydroxypropyl guar, or is carboxymethylcellulose, and the crystallization is carried out by carbonation, and the addition of the additive makes it possible to decrease the FD of the alkali metal bicarbonate particles is by at least 10%, or by at least 15%, relative to the FD of alkali metal bicarbonate particles obtained under the same crystallization conditions but without addition of additive.

14. Method according to any one of Claims 1 to 10, in which the additive is chosen from: alginic acid or carboxymethylcellulose, and in which the addition of additive makes it possible to:

   • increase the particle size (such as D10, D50, D90) or decrease the span, or
   • decrease the undersize on a sieve at 125 $\mu$m, or
   • increase the oversize on a sieve at 250 $\mu$m, or
   • decrease the dissolution time, or
   • increase the flow density (FD), or
   • decrease the wear index,

of the alkali metal bicarbonate particles, relative to one and the same production that would be carried out without additive, preferentially in which the crystallization of the alkali bicarbonate particles is carried out by cooling and/or by carbonation.

15. Alkali metal bicarbonate particle which can be obtained by means of the method according to any one of Claims 1 to 14 and which comprises at least 10 ppm, advantageously at least 20 ppm, of the additive.

Fig.1

Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3981686 A

**Littérature non-brevet citée dans la description**

- Sodium carbonate. Ullmann's Encyclopedia of Industrial Chemistry. Wiley-VCH Verlag GmbH & Co, 2012, vol. 33, 307